# EUROPEAN PATENT APPLICATION

(11) **EP 4 024 762 A1**
(43) Date of publication of application: **06.07.2022**
(21) Application number: 20862875.0
(22) Date of filing: 14.09.2020
(51) Int. Cl.: H04L 12/24

(54) **METHOD AND DEVICE FOR PREDICTING CONNECTION STATE BETWEEN TERMINALS, AND ANALYSIS DEVICE**

(30) Priority: 12.09.2019 CN 201910866653
(71) Applicant: Huawei Technologies Co., Ltd., Longgang District Shenzhen, Guangdong 518129 (CN)
(72) Inventor: ZHANG, Hao, Shenzhen, Guangdong 518129 (CN); XIE, Yuming, Shenzhen, Guangdong 518129 (CN); WANG, Miaomiao, Shenzhen, Guangdong 518129 (CN); WANG, Zhongyu, Shenzhen, Guangdong 518129 (CN)
(74) Representative: Epping - Hermann - Fischer
(86) International application number: PCT/CN2020/114979
(87) International publication number: WO 2021/047665

(57) **Abstract**

This application discloses an inter-terminal connection state prediction method and apparatus and an analysis device, and relates to application of an artificial intelligence technology in the computer network field. An analysis device obtains connection states of a testing terminal pair that respectively correspond to a plurality of unit moments in a first historical time segment. The testing terminal pair includes a first terminal and a second terminal, the first historical time segment is a time segment before a current time, the first historical time segment includes M consecutive unit moments, and M is a natural number greater than or equal to 2. The analysis device determines, based on the connection states of the testing terminal pair that respectively correspond to the plurality of unit moments in the first historical time segment, a connection state that is of the testing terminal pair and that corresponds to at least one unit moment in a future time segment.

## Description

### TECHNICAL FIELD

This application relates to the field of computer network technologies, further relates to application of an artificial intelligence (Artificial Intelligence, AI) technology in the computer network field, and in particular, relates to an inter-terminal connection state prediction method, an inter-virtual machine connection state prediction apparatus, and an analysis device.

### BACKGROUND

A data center (data center, DC) is a pool (pool) formed by several resources that are connected to each other over a communications network. The resources include a computing resource, a storage resource, a network resource, and the like. A virtual machine has advantages of low costs, agility and flexibility, good scalability, and the like. Therefore, the virtual machine is an important computing resource in the DC. A data center network (Data Center Network, DCN) is used to interconnect the resources in the DC. The DCN plays a key role in the DC. To cope with increasing cloud computing requirements, the DCN needs to be extendible and efficiently connect hundreds and thousands of virtual machines and other resources such as memories.

Virtual machines in a DC communicate with each other to collaboratively complete various services in the DC. A connection state between virtual machines indicates whether two virtual machines communicate with each other. When the two virtual machines communicate with each other, the connection state between the two virtual machines is connectional. When the two virtual machines do not communicate with each other, the connection state between the two virtual machines is connectionless.

An inter-virtual machine connection state prediction technology (which is subsequently referred to as a "prediction technology" for short in this application) is one of key technologies in a DCN. The technology is widely applied to many scenarios, for example, fault impact analysis and configuration verification scenarios. Fault impact analysis means that when a virtual machine is faulty, the inter-virtual machine connection state prediction technology is used to determine other virtual machines that are theoretically connected to the faulty virtual machine, to further analyze an impact scope of a fault. Configuration verification means that when a configuration of a virtual machine is to be updated (herein, the virtual machine whose configuration is to be updated is denoted as a VM 1), the inter-virtual machine connection state prediction technology is used to determine other virtual machines that are theoretically connected to the VM 1 assuming that the configuration is not updated. After the configuration of the VM 1 is updated, whether these virtual machines are connected to the VM 1 whose configuration has just been updated is detected, to analyze impact of the configuration update on connections between the VM 1 and the other virtual machines, thereby avoiding misconfiguration from affecting service smoothness.

Several prediction methods are proposed in a related technology. One is a prediction method based on service regularity hypothesis. In this prediction method, a connection state between a pair of virtual machines at a moment in a day is predicted based on a connection state between the pair of virtual machines at the same moment in a previous day. For example, before 10:00 on January 11, 2015, a connection state between a virtual machine VM 1 and a virtual machine VM 2 at 10:00 on January 10, 2015 is used as a predicted connection state between the virtual machine VM 1 and the virtual machine VM 2 at 10:00 on January 11, 2015.

Another one is a prediction method based on service continuity hypothesis. In this prediction method, a connection state between a pair of virtual machines at a moment is predicted based on a connection state between the pair of virtual machines at a previous moment. For example, before 10:00 on January 11, 2015, a connection state between a virtual machine VM 1 and a virtual machine VM 2 at 9:00 on January 11, 2015 is used as a predicted connection state between the virtual machine VM 1 and the virtual machine VM 2 at 10:00 on January 11, 2015.

However, according to specific practice results, the foregoing two prediction methods have poor accuracy.

### SUMMARY

Embodiments of this application provide an inter-terminal connection state prediction method, to resolve the problem of poor accuracy of a related prediction technology.

According to a first aspect, an inter-terminal connection state prediction method is provided. An analysis device obtains connection states of a testing terminal pair that respectively correspond to a plurality of unit moments in a first historical time segment. The testing terminal pair includes a first terminal and a second terminal, the first historical time segment is a time segment before a current time, the first historical time segment includes M consecutive unit moments, and M is a natural number greater than or equal to 2. The analysis device determines, based on the connection states of the testing terminal pair that respectively correspond to the plurality of unit moments in the first historical time segment, a connection state that is of the testing terminal pair and that corresponds to at least one unit moment in a future time segment. The future time segment is a time segment after the current time, the future time segment includes Q consecutive unit moments, the first unit moment in the future time segment and the last unit moment in the first historical time segment are consecutive unit moments, and Q is a natural number greater than or equal to 1.

According to the inter-terminal connection state prediction method provided in this embodiment of this application, in a prediction process, the analysis device uses connection status information of the testing terminal pair in a plurality of historical unit moments, instead of using connection status information of the testing terminal pair in a single historical unit moment. This is conducive to discover more useful information by analyzing historical status information, thereby improving prediction accuracy.

Optionally, in a possible implementation, the analysis device determines, by using the following steps, the connection state that is of the testing terminal pair and that corresponds to the at least one unit moment in the future time segment: The analysis device inputs, to a prediction model, the connection states of the testing terminal pair that respectively correspond to the plurality of unit moments in the first historical time segment, and obtains an output result of the prediction model. The prediction model is generated based on connection states that are of N training terminal pairs and that respectively correspond to a plurality of unit moments in a second historical time segment, the second historical time segment is a time segment before the current time, the second historical time segment includes M + Q consecutive unit moments, and N is a natural number greater than or equal to 1. The analysis device determines, based on the output result, the connection state that is of the testing terminal pair and that corresponds to the at least one unit moment in the future time segment. The analysis device obtains the prediction model through training by using a machine learning algorithm and fully utilizing long-term historical connection status information of a large quantity of training terminal pairs. In this way, general and dynamic trend information or pattern information that can reflect connection states of a plurality of terminal pairs in the same network scenario can be extracted, so that prediction is performed more accurately.

Optionally, in a possible implementation, the analysis device obtains the output result of the prediction model through the following steps: The analysis device determines a first sample sequence based on the connection states of the testing terminal pair that respectively correspond to the plurality of unit moments in the first historical time segment. The first sample sequence includes M elements, and a value of each of the M elements corresponds to a connection state corresponding to one of the M consecutive unit moments. The analysis device inputs the first sample sequence to the prediction model and obtains an output result of the prediction model. The output result is a predicted sequence, the predicted sequence includes Q elements, and a value of each of the Q elements corresponds to a connection state corresponding to one of the Q consecutive unit moments. The analysis device first obtains the first sample sequence that reflects a historical connection state of the testing terminal pair, and then inputs the first sample sequence to the prediction model and obtains the predicted sequence that serves as the output result. Prediction by using a sample sequence is an effective way of applying the prediction model.

Optionally, when a value of one of the M elements or Q elements is a first value, it indicates that a connection state at a corresponding unit moment is connectional; and when a value of one of the M elements or Q elements is a second value, it indicates that a connection state at a corresponding unit moment is connectionless, where the first value and the second value are different. Using different element values in each sample sequence to indicate connection states is a simple and efficient connection state representation method.

Optionally, in a possible implementation, the analysis device obtains the prediction model through training through the following steps: The analysis device obtains the connection states that are of the N training terminal pairs and that respectively correspond to the plurality of unit moments in the second historical time segment; the analysis device generates, based on connection states that are of a first training terminal pair of the N training terminal pairs and that respectively correspond to the plurality of unit moments in the second historical time segment, a training sample sequence corresponding to the first training terminal pair, where the rest can be processed in the same way to obtain N training sample sequences, the training sample sequence corresponding to the first training terminal pair includes M + Q elements, and a value of each of the M + Q elements corresponds to a connection state that is of the first training terminal pair and that corresponds to one of the M + Q consecutive unit moments; and the analysis device uses the N training sample sequences as an input of the machine learning algorithm, and obtains the prediction model that is output by the machine learning algorithm. The analysis device first obtains the training sample sequences that reflect a historical connection status trend of the training terminal pairs, and then performs training based on the large quantity of training sample sequences by using the machine learning algorithm, to generate the prediction model. This provides an effective prediction model learning method. The prediction model reflects general and dynamic trend information or pattern information of connection states of a plurality of terminal pairs in the same network scenario.

Optionally, the analysis device obtains, through the following steps, the connection states of the testing terminal pair that respectively correspond to the plurality of unit moments in the first historical time segment: The analysis device selects a first group of target entries from saved entries that respectively correspond to a plurality of data flows. The first group of target entries includes an entry in which a recorded unit moment belongs to the first historical time segment, a source IP address is an IP address of the first terminal, and a destination IP address is the second terminal, and an entry in which a recorded unit moment belongs to the first historical time segment, a destination IP address is the IP address of the first terminal, and a source IP address is the second terminal. The analysis device determines that a connection state corresponding to a unit moment recorded in the selected first group of target entries is connectional, and determines that a connection state corresponding to a unit moment that is in the first historical time segment and that is other than the unit moment recorded in the selected first group of target entries is connectionless, thereby obtaining the connection states of the testing terminal pair that respectively correspond to the plurality of unit moments in the first historical time segment. By using the foregoing data processing method, the analysis device obtains historical connection status information that is of the testing terminal pair and whose granularity is a time segment between two adjacent unit moments, so that a future connection state of the testing terminal pair is subsequently predicted based on the historical connection status information of the testing terminal pair.

Optionally, in a possible implementation, the analysis device obtains, through the following steps, the connection states that are of the N training terminal pairs and that respectively correspond to the plurality of unit moments in the second historical time segment: The analysis device obtains the N training terminal pairs. The analysis device selects one training terminal pair from the N training terminal pairs, and performs the following processing steps on the selected training terminal pair, until all the N training terminal pairs are processed, where the selected training terminal pair includes a third terminal and a fourth terminal: The analysis device selects a second group of target entries from the saved entries that respectively correspond to the plurality of data flows. The second group of target entries includes an entry in which a recorded unit moment belongs to the second historical time segment, a source IP address is an IP address of the third terminal, and a destination IP address is the fourth terminal, and an entry in which a recorded unit moment belongs to the second historical time segment, a destination IP address is the IP address of the fourth terminal, and a source IP address is the third terminal. The analysis device determines that a connection state corresponding to a unit moment recorded in the selected second target entries is connectional, and determines that a connection state corresponding to a unit moment that is in the second historical time segment and that is other than the unit moment recorded in the selected second group target entries is connectionless, thereby obtaining connection states of the selected training terminal pair that respectively correspond to the plurality of unit moments in the second historical time segment. By using the foregoing data processing method, the analysis device obtains historical connection status information that is of the training terminal pairs and whose granularity is a time segment between two adjacent unit moments, so that the prediction model is subsequently obtained through training based on the historical connection status information of the training terminal pairs.

Optionally, in a possible implementation, when Q = 1, a ratio between a quantity of positive samples and a quantity of negative samples in the N training sample sequences is greater than or equal to 0.5 and less than or equal to 2. A positive sample is a training sample sequence in which a connection state indicated by a value of the last element is connectional, and a negative sample is a training sample sequence in which a connection state indicated by a value of the last element is connectionless. Training sample sequences meeting the foregoing condition are considered as a balanced sample set. The analysis device trains the prediction model based on the balanced sample set, thereby obtaining a prediction model having a better prediction effect.

Optionally, in a possible implementation, the analysis device obtains several entries from flow statistical information through the following steps, where an entry may be considered as raw data for obtaining a connection state of a testing terminal pair or a training terminal pair: The analysis device obtains a plurality of flow statistical information entries. Each of the plurality of flow statistical information entries corresponds to one data flow, and the flow statistical information entry includes a creation time, a closing time, a source IP address, and a destination IP address of the data flow. The analysis device performs time alignment processing on each flow statistical information entry by using the unit moment as a criterion based on a preset time alignment rule, generates entries respectively corresponding to the plurality of data flows, and saves the entries respectively corresponding to the plurality of data flows. Each of the entries respectively corresponding to the plurality of data flows records a unit moment, a source IP address, and a destination IP address. Entry data generated by using the foregoing manner keeps only connection state-related information in the flow statistical information, thereby reducing a data volume compared to the flow statistical information and saving storage space. In addition, time alignment processing is performed in the process of generating the entry data. This is conducive to improve subsequent processing efficiency.

Optionally, the first terminal, the second terminal, the third terminal, and the fourth terminal in any one of the first aspect or the possible implementations of the first aspect are all virtual machines. Further, the virtual machines are deployed in a data center connected through a DCN. The prediction method provided in this embodiment of this application is applicable to predicting a connection state between two virtual machines in a DC.

According to a second aspect, an inter-terminal connection state prediction apparatus is provided. The apparatus has a function for implementing the method according to any one of the first aspect or the possible implementations of the first aspect. The function may be implemented by hardware, or may be implemented by hardware executing corresponding software. The hardware or the software includes one or more modules corresponding to the foregoing function.

According to a third aspect, an analysis device is provided. The analysis device includes a memory and at least one processor. The memory is configured to store instructions, and after the instructions are read by the at least one processor, the analysis device performs the method according to any one of the first aspect or the possible implementations of the first aspect. For details, refer to detailed descriptions above. Details are not described herein again.

According to a third aspect, an embodiment of this application provides a computer storage medium, configured to store computer software instructions used by the analysis device. The instructions include a program designed to perform the method according to any one of the first aspect or the possible implementations of the first aspect.

According to fourth aspect, a computer program product including instructions is provided. When the computer program product runs on a computer, the computer is enabled to perform the method according to any one of the first aspect or the possible implementations of the first aspect.

According to a fifth aspect, an embodiment of this application provides a chip, including a memory and a processor. The memory is configured to store computer instructions, and the processor is configured to invoke the computer instructions from the memory and run the computer instructions, to perform the method according to any one of the first aspect and the possible implementations of the first aspect.

### BRIEF DESCRIPTION OF DRAWINGS

To describe the technical solutions in the embodiments of this application more clearly, the following briefly describes the accompanying drawings required for describing the embodiments. Clearly, the accompanying drawings in the following descriptions show some embodiments of this application, and a person of ordinary skill in the art may still derive other drawings from these accompanying drawings without creative efforts.
FIG. 1 is a schematic diagram of an application scenario according to an embodiment of this application;
FIG. 2 is a flowchart of an inter-terminal connection state prediction method according to an embodiment of this application;
FIG. 3A and FIG. 3B are flowcharts of an inter-terminal connection state prediction method based on a prediction model according to an embodiment of this application;
FIG. 4A is a schematic diagram of a training sample sequence corresponding to a first training virtual machine pair according to an embodiment of this application;
FIG. 4B is a schematic diagram of N training sample sequences according to an embodiment of this application;
FIG. 4C is a schematic diagram of a first sample sequence corresponding to a testing virtual machine pair according to an embodiment of this application;
FIG. 5 is a schematic diagram of a process in which an analysis device inputs N training sample sequences to an MLP to obtain a prediction model according to an embodiment of this application;
FIG. 6 is a schematic diagram of a structure of an analysis device according to an embodiment of this application; and
FIG. 7 is a schematic diagram of a structure of an inter-terminal connection state prediction apparatus according to an embodiment of this application.

### DESCRIPTION OF EMBODIMENTS

Several prediction methods in a related technology have poor accuracy. Therefore, embodiments of the present invention provide an inter-terminal connection state prediction method. In this method, useful information is extracted, by using an artificial intelligence technology, based on connection states of a terminal pair (where in this embodiment, a pair of terminals including two terminals is referred to as a "terminal pair") at a plurality of unit moments in a historical time segment. For example, a connection state mathematical model of a terminal pair is constructed based on long-term historical connection status information of the terminal pair, or a prediction model is constructed based on long-term historical connection status information of several terminal pairs. When a connection state of a terminal pair needs to be predicted, a connection state that is of the terminal pair and that corresponds to at least one unit moment in a future time segment is obtained based on the foregoing useful information. In this method, historical connection status information of a terminal pair in a long term is fully used to perform prediction. This is conducive to improve prediction accuracy.

The prediction method provided in the embodiments of this application is applicable to a plurality of network scenarios, for example, a local area network in a company, a government department, or a school, and a DCN. Based on different specific application scenarios, optionally, terminals included in a terminal pair are personal computers, notebook computers, mobile terminals, wearable devices, or virtual machines.

Optionally, two terminals included in a terminal pair are devices of a same type. For example, both are personal computers, or both are virtual machines. Alternatively, two terminals included in a terminal pair are devices of different types. For example, one terminal in a terminal pair is a personal computer, and the other terminal is a virtual machine. Alternatively, one terminal in a terminal pair is a mobile terminal, and the other terminal is a virtual machine.

In the following embodiments, the prediction method provided in the embodiments of this application is mainly described by using a DCN scenario as an example. A feature of the DCN scenario is that a large quantity of virtual machines provide computing resources. A virtual machine is a logical computer device that is simulated by using a virtualization technology and that has functions of a complete software and hardware system. A host is a foundation for implementing the virtualization technology, that is, the host is a computer device that provides actual hardware resources for the virtualization technology. For example, when the virtualization technology is implemented by using virtualization software, after the virtualization software is installed on a host, one or more virtual machines may be generated as configured based on hardware resources of the host. Therefore, the host may also be considered as a hardware platform for running the virtual machine. In the DCN scenario, a terminal pair is a virtual machine pair, namely, a pair of virtual machines including two virtual machines. Implementation principles of the prediction method are basically similar in different scenarios, and therefore, are not illustrated one by one.

Main implementation principles and specific implementations of the technical solutions in the embodiments of the present invention, and corresponding beneficial effects that the technical solutions in the embodiments of the present invention can achieve are described in detail below with reference to the accompanying drawings.

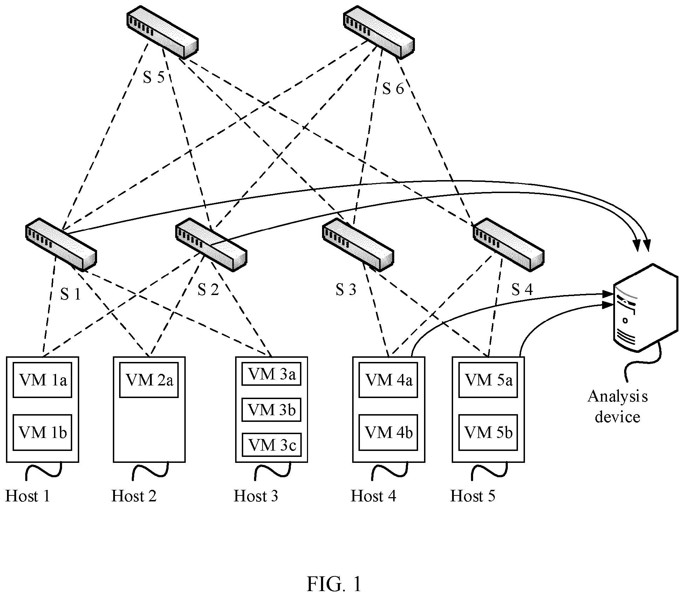

FIG. 1 is a schematic diagram of an application scenario in a DCN scenario according to an embodiment of this application. ADCN includes a plurality of hosts (host), which are denoted as a host 1, a host 2, a host 3, a host 4, and a host 5. One or more different virtual machines run on each host. For example, a VM 1a and a VM 1b run on the host 1, a VM 2a runs on the host 2, a VM 3a, a VM 3b, and a VM 3c run on the host 3, a VM 4a and a VM 4b run on the host 4, and a VM 5a and a VM 5b run on the host 5.

The scenario shown in FIG. 1 further includes a plurality of packet forwarding devices. The packet forwarding devices include various switches, for example, a layer 2 switch or a layer 3 switch. A layer 2 switch works at a data link layer, can identify MAC address information in a data packet, and looks up an address table based on the identified MAC address to implement forwarding, where the address table includes a correspondence between a MAC address and a port number. A layer 3 switch works at a network layer and implements forwarding by using a layer 3 switching technology. The layer 3 switching technology is a technology that combines a routing technology and a switching technology. After a layer 3 switch routes a first data flow, the layer 3 switch generates a mapping table between a MAC address and an IP address. When a same data flow passes through the layer 3 switch again, the layer 3 switch performs forwarding from layer 2 based on the mapping table, instead of performing routing again. For example, in FIG. 1, switches S 1, S 2, S 3, and S 4 are layer 2 switches; and switches S 5 and S 6 are layer 3 switches.

As shown in a dashed line in FIG. 1, a physical connection, for example, an Ethernet connection, exists between a host and a packet forwarding device. Virtual machines communicate with each other by using a physical connection between a packet forward device and a host that serves as a virtual machine running platform.

The application scenario shown in FIG. 1 further includes an analysis device. The analysis device communicates with a data source device, to obtain a plurality of flow statistical information entries. Optionally, the data source device includes a packet forwarding device and a host. Each flow statistical information entry corresponds to one data flow, and the flow statistical information entry includes a creation time, a source IP address, and a destination IP address of the data flow. In the embodiments of this application, a data flow is a series of packets from a sour computer to a destination party. The destination party may be another computer, or may be a group of computers or a broadcast domain.

Optionally, the data source device mirrors traffic transmitted through a network interface of the data source device, and sends the mirrored traffic to the analysis device. The analysis device briefly parses the mirrored traffic, to obtain flow statistical information. The simple parsing includes selecting a synchronize sequence numbers (Synchronize Sequence Numbers, SYN) packet from all the traffic, extracting a source IP address and a destination IP address from the SYN packet, and generating the flow statistical information based on a sending time of the SYN packet and the extracted source IP address and destination IP address. This manner does not consume excessive processing resources of the data source device and has low requirements on hardware of the data source device, and therefore, is applicable to a case in which the data source device is a switch or a host.

Alternatively, the data source device briefly parses a packet transmitted through a network interface of the data source device, to obtain flow statistical information; and sends the flow statistical information to the analysis device. Compared with a manner in which the data source device directly sends a mirrored packet, this manner can save network transmission resources, because a data volume of the flow statistical information is smaller than that of the mirrored packet. This manner has specific requirements on a processing capability of the data source device, and therefore, is more suitable to a case in which the data source device is a host.

Table 1 is an example of flow statistical information received by the analysis device, where each row represents one flow statistical information entry. Optionally, different data sources may record creation times, source IP addresses, and destination IP addresses of data flows by using different formats or encoding modes, for example, record address information in binary, decimal, or hexadecimal format. The analysis device first converts a format of received raw flow statistical information, to normalize the original flow statistical information into flow statistical information in a uniform format. It can be understood that IP addresses in flow statistical information are intended for distinguishing between different virtual machines. For ease of understanding and description, in this embodiment, IP addresses are replaced by virtual machine identifiers.

**Table 1**

| Time | Source IP address | Destination IP address |
|---|---|---|
| 2015-1-10 11:23:00 | VM 1a | VM 1b |
| 2015-1-10 11:45:00 | VM 1a | VM 1b |
| 2015-1-10 11:55:00 | VM 1a | VM 1b |
| 2015-1-10 11:02:00 | VM 2a | VM 3a |
| ... | ... | ... |

The analysis device performs time alignment processing on each flow statistical information entry by using the unit moment as a criterion based on a preset time alignment rule, generates entries respectively corresponding to a plurality of data flows, and saves the entries respectively corresponding to the plurality of data flows.

Optionally, when the analysis device performs time alignment processing on a plurality of received flow statistical information entries, a time granularity used may be set by an administrator based on various factors such as storage space and processing resources of the analysis device, a network scale of the DCN, and an analysis purpose. The time alignment processing can reduce a data volume to save storage space, and is conducive to improve subsequent analysis efficiency.

Optionally, the preset time alignment rule may be set flexibly. A granularity used in time alignment processing may be set as required, for example, 1 hour, half an hour, 10 minutes, or 1 minute. It is assumed that in the embodiments of this application, when the analysis device performs time alignment processing on a plurality of received flow statistical information entries, a time granularity used is 1 hour. In other words, a unit time of an entry obtained after the alignment processing is 1 hour. For example, a time alignment rule is to process a time between two unit moments to a former one of the two unit moments, for example, "2015-1-10 11:23:00" is processed to "2015-1-10 11:00:00". Another time alignment rule is to process a time between two unit moments to a later one of the two unit moments, for example, "2015-1-10 11:55:00" is processed to "2015-1-10 12:00:00".

After the time alignment processing, the analysis device obtains the entries shown in Table 2 and saves these entries for subsequent use.

**Table 2**

| Hourly-granulated unit moment identifier | Source IP address | Destination IP address |
|---|---|---|
| 2015-1-10 11:00:00 | VM 1a | VM 1b |
| 2015-1-10 12:00:00 | VM 1a | VM 1b |
| 2015-1-10 13:00:00 | VM 2a | VM 3a |
| 2015-1-10 9:00:00 | VM 1a | VM 2a |
| ... | ... | ... |

Further, by using an artificial intelligence technology and based on saved entries respectively corresponding to a plurality of data flows, the analysis device obtains, through analysis, connection status trend or pattern information of a virtual machine pair, or constructs a prediction model. The following describes the inter-terminal connection state prediction method provided in the embodiments of this application with reference to each embodiment. An artificial intelligence technology is a technology that enables an artificially manufactured machine to exhibit human-like intelligence. According to existing researches, artificial intelligence technologies include a machine learning algorithm.

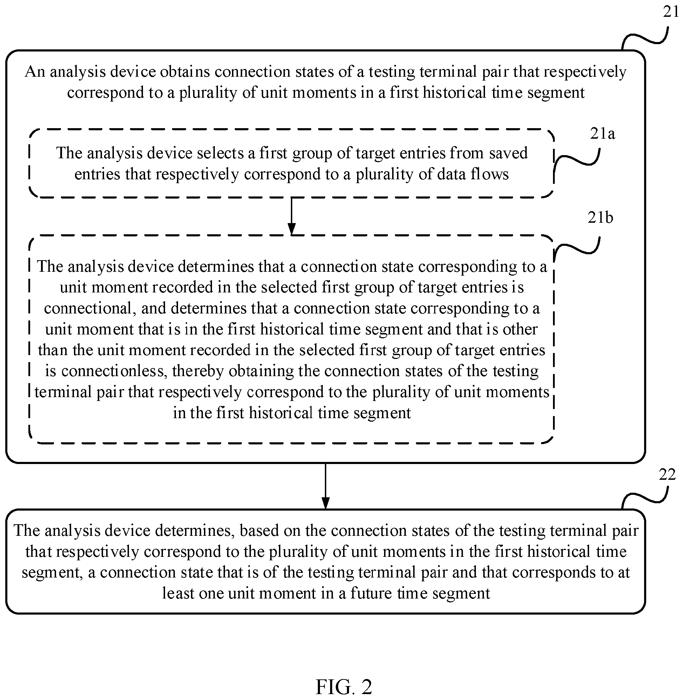

FIG. 2 is a flowchart of an inter-terminal connection state prediction method according to an embodiment of this application. In FIG. 2, the method is mainly described from a perspective of an analysis device. Optionally, the analysis device in FIG. 2 is the analysis device in FIG. 1.

Step 21: The analysis device obtains connection states of a testing terminal pair that respectively correspond to a plurality of unit moments in a first historical time segment, where the testing terminal pair includes a first terminal and a second terminal, the first historical time segment is a time segment before a current time, the first historical time segment includes M consecutive unit moments, and M is a natural number greater than or equal to 2.

For example, when the current time is 2015-1-11 9:20, a current prediction task of the analysis device is to predict a connection state between virtual machines VM 1a and VM 2a at 2015-1-11 10:00 in the scenario shown in FIG. 1. An administrator may input the prediction task through an input device connected to an input/output interface of the analysis device. In other words, a testing virtual machine pair in this embodiment is (VM la-VM 2a).

It is assumed that the first historical time segment is the three hours before the current time, that is, M = 3. Then, the first historical time segment is 2015-1-11 6:20 to 2015-1-11 9:20. The first historical time segment includes three unit moments, which are 2015-1-11 7:00, 2015-1-11 8:00, and 2015-1-11 9:00.

To complete the prediction task, the analysis device first obtains connection states of the testing virtual machine pair (VM la-VM 2a) that respectively correspond to 2015-1-11 7:00, 2015-1-11 8:00, and 2015-1-11 10:00.

Optionally, the analysis device obtains, by using steps 21a and 21b, the connection states of the testing terminal pair that respectively correspond to the plurality of unit moments in the first historical time segment.

Step 21a: The analysis device selects a first group of target entries from saved entries that respectively correspond to a plurality of data flows, where the first group of target entries includes an entry in which a recorded unit moment belongs to the first historical time segment, a source IP address is an IP address of the first terminal, and a destination IP address is the second terminal, and an entry in which a recorded unit moment belongs to the first historical time segment, a destination IP address is the IP address of the first terminal, and a source IP address is the second terminal.

Step 21b: The analysis device determines that a connection state corresponding to a unit moment recorded in the selected first group of target entries is connectional, and determines that a connection state corresponding to a unit moment that is in the first historical time segment and that is other than the unit moment recorded in the selected first group of target entries is connectionless, thereby obtaining the connection states of the testing terminal pair that respectively correspond to the plurality of unit moments in the first historical time segment.

Refer to the foregoing example again. The analysis device selects, from the entries shown in Table 2, entries that meet either of the following two conditions, to form the first group of target entries:
Condition 1: A unit moment is one of 2015-1-11 7:00, 2015-1-11 8:00, or 2015-1-11 10:00, a source IP address is VM 1a, and a destination IP address is VM 2a.
Condition 2: A unit moment is one of 2015-1-11 7:00, 2015-1-11 8:00, or 2015-1-11 10:00, a source IP address is VM 2a, and a destination IP address is VM 1a.

It is assumed that the first group of target entries selected by the analysis device from the entries shown in Table 2 is shown in Table 3.

**Table 3**

| Hourly-granulated unit moment identifier | Source IP address | Destination IP address |
|---|---|---|
| 2015-1-10 8:00:00 | VM 1a | VM 2a |
| 2015-1-10 9:00:00 | VM 2a | VM 1a |

The selected first group of target entries shown in Table 3 includes unit moment identifiers 2015-1-10 8:00:00 and 2015-1-10 9:00:00, and does not include a unit moment 2015-1-10 7:00:00. Therefore, the analysis device determines that a connection state of the testing virtual machine pair (VM la-VM 2a) is connectional at 2015-1-10 8:00:00, a connection state is connectional at 2015-1-10 9:00:00, and a connection state is connectionless at 2015-1-10 7:00:00.

Step 22: The analysis device determines, based on the connection states of the testing terminal pair that respectively correspond to the plurality of unit moments in the first historical time segment, a connection state that is of the testing terminal pair and that corresponds to at least one unit moment in a future time segment, where the future time segment is a time segment after the current time, the future time segment includes Q consecutive unit moments, the first unit moment in the future time segment and the last unit moment in the first historical time segment are consecutive unit moments, and Q is a natural number greater than or equal to 1.

According to the inter-terminal connection state prediction method provided in this embodiment of this application, in an application scenario using a DCN as an example, the analysis device first obtains, from a data source device, connection status information that is of the testing virtual machine pair serving as a tested object and that corresponds to a plurality of historical unit moments. The analysis device predicts a connection state of the testing virtual machine pair in a future time segment by using the connection status information of the testing virtual machine pair at the plurality of historical unit moments as a test basis. The connection status information of the testing virtual machine pair at the plurality of historical unit moments, instead of connection status information of the testing virtual machine pair at a single historical unit moment, is used in the prediction process. This is conducive to discover more useful information, for example, more detailed and specific pattern or trend information, by analyzing historical status information, thereby improving prediction accuracy.

Optionally, after the analysis device obtains a prediction result (namely, the connection state that is of the testing terminal pair and that corresponds to the at least one unit moment in the future time segment) by using the prediction method provided in this embodiment of this application, the analysis device applies the prediction result to different scenarios, for example, fault impact analysis and configuration verification scenarios, to further improve accuracy of fault impact analysis and accuracy of configuration verification.

Under the overall concept of "predicting a connection state of the testing terminal pair in a future time segment by using connection status information of the testing terminal pair at a plurality of historical unit moments as a test basis", a plurality of possible implementation solutions are available in an implementation process. These implementation solutions include, but are not limited to, methods of constructing a mathematical model and a prediction model based on historical connection status information that includes connection states at a plurality of unit moments. In the following embodiments of this application, a mathematical model or a prediction model is used as an example to describe the prediction method provided in the embodiments of this application.

### I. Predict a connection state of the testing terminal pair based on a mathematical model

The analysis device determines a connection state mathematical model of the testing terminal pair based on the connection states of the testing terminal pair that respectively correspond to the plurality of unit moments in the first historical time segment. Further, the analysis device determines, based on the mathematical model, the connection state that is of the testing terminal pair and that corresponds to the at least one unit moment in the future time segment.

Optionally, the analysis device prestores a plurality of mathematical model matching rules. The analysis device matches, against the matching rules one by one, connection states that are of the testing virtual machine pair (VM la-VM 2a) and that respectively correspond to the plurality of unit moments in the first historical time segment, to determine a mathematical model to which historical connection status information of the testing virtual machine pair (VM la-VM 2a) conforms. Certainly, the analysis device may also use another mechanism to learn a mathematical model to which historical connection status information of the testing virtual machine pair (VM la-VM 2a) conforms.

The following two examples (example 1 and example 2) serve to provide illustrative descriptions. Clearly, many more similar mathematical models are available, which cannot be enumerated herein.

### Example 1

The analysis device determines, based on a connection state that is of the testing virtual machine pair (VM la-VM 2a) and that corresponds to each of past 24 hours, that a connection state mathematical model of the testing virtual machine pair (VM la-VM 2a) is that "a connection state stays in connectional for two consecutive hours; then switches to and stays in connectionless for three consecutive hours; then switches to and stays in connectional for two consecutive hours; and so on", as shown in Table 4. For brevity, a connection state is indicated by using a value 0 or 1 in Table 4, where 0 represents connectionless and 1 represents connectional.

**Table 4**

| (VM la-VM 2a) 2015-1-10 0:00:00 - 24:00:00 | | | | | | | | |
|---|---|---|---|---|---|---|---|---|
| Unit moment identifier | 0:00:00 | 1:00:00 | 2:00:00 | 3:00:00 | 4:00:00 | 5:00:00 | 6:00:00 | 7:00:00 |
| Connection state | 1 | 1 | 0 | 0 | 0 | 1 | 1 | 0 |
| Unit moment | 8:00:00 | 9:00:00 | 10:00:00 | 11:00:00 | 12:00:00 | 13:00:00 | 14:00:00 | 15:00:00 |
| identifier | | | | | | | | |
| Connection state | 0 | 0 | 1 | 1 | 0 | 0 | 0 | 1 |
| Unit moment identifier | 16:00:00 | 17:00:00 | 18:00:00 | 19:00:00 | 20:00:00 | 21:00:00 | 22:00:00 | 23:00:00 |
| Connection state | 1 | 0 | 0 | 0 | 1 | 1 | 0 | 0 |

Table 5 shows connection states that are of the testing virtual machine pair (VM la-VM 2a) in a future time segment of 2015-1-11 0:00:00-24:00:00 and that are determined by the analysis device based on the foregoing mathematical model.

**Table 5**

| (VM la-VM 2a) 2015-1-11 0:00:00 - 24:00:00 | | | | | | | | |
|---|---|---|---|---|---|---|---|---|
| Unit moment identifier | 0:00:00 | 1:00:00 | 2:00:00 | 3:00:00 | 4:00:00 | 5:00:00 | 6:00:00 | 7:00:00 |
| Connection state | 0 | 1 | 1 | 0 | 0 | 0 | 1 | 1 |
| Unit moment identifier | 8:00:00 | 9:00:00 | 10:00:00 | 11:00:00 | 12:00:00 | 13:00:00 | 14:00:00 | 15:00:00 |
| Connection state | 0 | 0 | 0 | 1 | 1 | 0 | 0 | 0 |
| Unit moment identifier | 16:00:00 | 17:00:00 | 18:00:00 | 19:00:00 | 20:00:00 | 21:00:00 | 22:00:00 | 23:00:00 |
| Connection state | 1 | 1 | 0 | 0 | 0 | 1 | 1 | 0 |

In this example, M = 24 and Q = 24.

### Example 2

The analysis device determines, based on a connection state that is of the testing virtual machine pair (VM la-VM 2a) and that corresponds to each of past 24 hours, that a connection state mathematical model of the testing virtual machine pair (VM la-VM 2a) is that "a connection state stays in connectional for n consecutive hours; then switches to and stays in connectionless for n consecutive hours; and then switches to and stays in connectional, where n starts from 1 and increments by 1 each time", as shown in Table 6. For brevity, a connection state is indicated by using a value 0 or 1 in Table 6, where 0 represents connectionless and 1 represents connectional.

**Table 6**

| (VM la-VM 2a) 2015-1-10 0:00:00 - 24:00:00 | | | | | | | | |
|---|---|---|---|---|---|---|---|---|
| Unit moment identifier | 0:00:00 | 1:00:00 | 2:00:00 | 3:00:00 | 4:00:00 | 5:00:00 | 6:00:00 | 7:00:00 |
| Connection state | 1 | 0 | 1 | 1 | 0 | 0 | 1 | 1 |
| Unit moment | 8:00:00 | 9:00:00 | 10:00:00 | 11:00:00 | 12:00:00 | 13:00:00 | 14:00:00 | 15:00:00 |
| identifier | | | | | | | | |
| Connection state | 1 | 0 | 0 | 0 | 1 | 1 | 1 | 1 |
| Unit moment identifier | 16:00:00 | 17:00:00 | 18:00:00 | 19:00:00 | 20:00:00 | 21:00:00 | 22:00:00 | 23:00:00 |
| Connection state | 0 | 0 | 0 | 0 | 1 | 1 | 1 | 1 |

Table 7 shows connection states that are of the testing virtual machine pair (VM la-VM 2a) in a future time segment of 2015-1-11 0:00:00-11:00:00 and that are determined by the analysis device based on the foregoing mathematical model.

**Table 7**

| (VM la-VM 2a) 2015-1-11 0:00:00 - 11:00:00 | | | | | | | | |
|---|---|---|---|---|---|---|---|---|
| Unit moment identifier | 0:00:00 | 1:00:00 | 2:00:00 | 3:00:00 | 4:00:00 | 5:00:00 | 6:00:00 | 7:00:00 |
| Connection state | 1 | 0 | 0 | 0 | 0 | 0 | 1 | 1 |
| Unit moment identifier | 8:00:00 | 9:00:00 | 10:00:00 | 11:00:00 | | | | |
| Connection state | 1 | 1 | 1 | 1 | | | | |

In this embodiment, M = 24 and Q = 12.

According to the inter-terminal connection state prediction method provided in this embodiment of this application, in an application scenario using a DCN as an example, the analysis device first obtains, from a data source device, connection status information that is of the testing virtual machine pair serving as a tested object and that corresponds to a plurality of consecutive historical unit moments. The analysis device predicts a connection state of the testing virtual machine pair in a future time segment by using the connection status information of the testing virtual machine pair at the plurality of consecutive historical unit moments as a test basis. The test basis is the connection status information of the testing virtual machine pair at the plurality of consecutive historical unit moments, instead of connection status information of the testing virtual machine pair at a single historical unit moment. This is conducive to discover a long-term historical connection status trend of the testing virtual machine pair through analysis, thereby improving prediction accuracy.

### II. Predict a connection state of the testing virtual machine pair based on a prediction model

The analysis device determines, based on a prediction model, the connection state that is of the testing terminal pair and that corresponds to the at least one unit moment in the future time segment. The prediction model is obtained through training by the analysis device by using a machine learning algorithm based on historical connection status information of a large quantity of terminal pairs in a network scenario in which the testing terminal pair serving as a prediction object is located. The large quantity of terminal pairs used for training the prediction model are located in the same network scenario as the testing terminal pair serving as the prediction object. A terminal pair used for training the prediction model is referred to as a training terminal pair in this embodiment. Optionally, the training terminal pair may include a prediction terminal pair or may not include the prediction terminal pair. This is not limited herein.

Specifically, the analysis device generates the prediction model based on connection states that are of N training terminal pairs and that respectively correspond to a plurality of unit moments in a second historical time segment. In other words, the prediction model is generated based on the connection states that are of the N training terminal pairs and that respectively correspond to the plurality of unit moments in the second historical time segment. The second historical time segment is a time segment before the current time, the second historical time segment includes M + Q consecutive unit moments, and N is a natural number greater than or equal to 1. Usually, when a value of N reaches the million level, a satisfactory effect can be achieved. A prediction result is more accurate as the value of N increases within a proper value range. Then, the analysis device inputs, to the prediction model, the connection states of the testing terminal pair that respectively correspond to the plurality of unit moments in the first historical time segment; and obtains an output result of the prediction model.

It can be understood that the prediction model is trained based on a prediction requirement. The prediction requirement means M and Q. To be specific, "connection states of the testing terminal pair in a future time segment including Q unit moments are predicted based on the connection states of the testing terminal pair in the first historical time segment including M unit moments". Optionally, the administrator may input the prediction requirement through the input device connected to the input interface of the analysis device.

An input of the prediction model is the connection states of the testing terminal pair that respectively correspond to the plurality of unit moments in the first historical time segment. An output of the prediction model is the connection state that is of the testing terminal pair and that corresponds to the at least one unit in the future time segment. In this application, a process of generating the prediction model is described in detail with reference to the following embodiments.

Still using the scenario shown in FIG. 1 as an example, it is assumed that the first historical time segment is the three hours before the current time, that is, M = 3; and that the future time segment is the one hour after the current time, that is, Q = 1. Then, the future time segment is 2015-1-11 9:20 to 2015-1-11 10:20. The future time segment includes one unit moment, which is 2015-1-11 10:00.

The analysis device inputs, to the prediction model, the connection states that are of the testing virtual machine pair (VM la-VM 2a) at the unit moments in the three hours before the current time and that are determined in step 21. To be specific, information "the connection state of the testing virtual machine pair (VM la-VM 2a) is connectionless at 2015-1-10 7:00:00, the connection state is connectional at 2015-1-10 8:00:00, and the connection state is connectional at 2015-1-10 9:00:00" is input to the prediction model. The prediction model outputs that a connection state at 2015-1-11 10:00 is connectional.

The analysis device determines, based on the output of the prediction model, that a connection state of the testing virtual machine pair at 2015-1-10 10:00:00 that has not arrived is connectional.

According to the inter-terminal connection state prediction method provided in this embodiment of this application, in an application scenario using a DCN as an example, the analysis device obtains historical connection status information of a large quantity of training virtual machine pairs. The historical connection status information includes connection states respectively corresponding to a plurality of unit moments. The analysis device further generates the prediction model with reference to the prediction requirement based on the historical connection status information of the large quantity of training virtual machine pairs. During prediction, for the testing virtual machine pair serving as the prediction object, the analysis device inputs, to the prediction model, connection states of the testing virtual machine pair that respectively correspond to a plurality of unit moments in a historical time segment, and determines, based on an output of the prediction model, a connection state that is of the testing virtual machine pair and that corresponds to at least one unit moment in a future time segment. In this embodiment of this application, on the one hand, a large amount of historical connection status information includes historical connection status information of a large quantity of virtual machine pairs. On the other hand, the historical connection status information includes connection status information corresponding to at least two unit moments. In comparison with a prediction solution in which a connection state of testing virtual machines at a moment in a previous day is used as a connection state of the pair of virtual machines at the same moment in a current day and a solution in which a connection state of testing virtual machines at a previous moment is used as a connection state of the pair of virtual machines at a current moment, in the prediction method in this embodiment of this application, prediction is performed based on a large amount of historical connection status information. This reduces errors caused by accidental factors, thereby improving prediction accuracy.

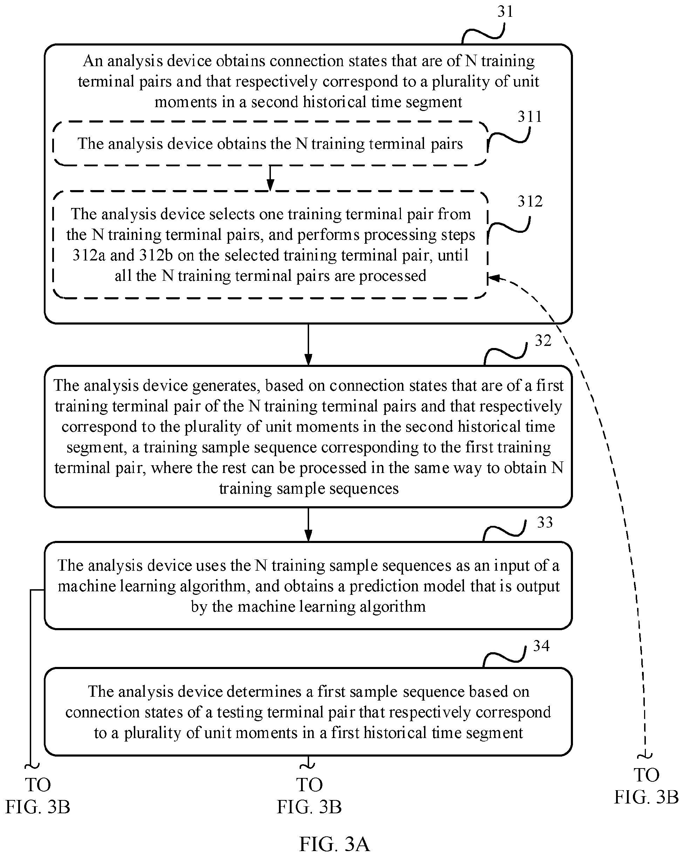

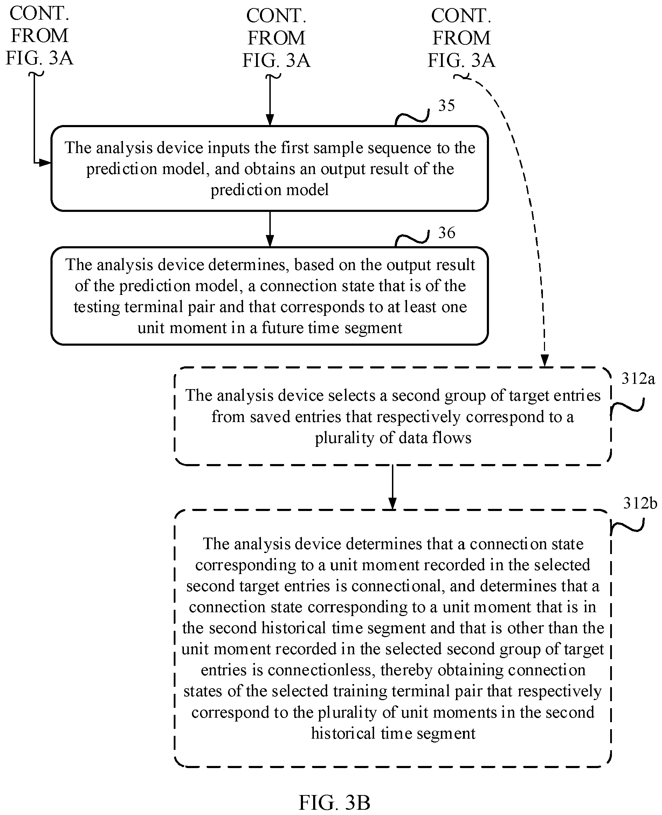

FIG. 3A and FIG. 3B are flowcharts of an inter-terminal connection state prediction method based on a prediction model according to an embodiment of this application. Optionally, an analysis device in FIG. 3A and FIG. 3B is the analysis device in FIG. 1 or FIG. 2. In a process shown in FIG. 3A and FIG. 3B, a subprocess including step 31 to step 33 mainly describes a process in which the analysis device generates a prediction model, a subprocess including step 34 to step 36 mainly describes a process in which the analysis device predicts a connection state of a testing terminal pair based on the prediction model. Clearly, after generating the prediction model, the analysis device may predict connection states of a plurality of testing terminal pairs based on the prediction model, without a need to regenerate a prediction model based on historical connection status information of a training terminal pair in each prediction.

Step 31: The analysis device obtains connection states that are of N training terminal pairs and that respectively correspond to a plurality of unit moments in a second historical time segment. For a definition of the second historical time segment, refer to descriptions above. Details are described herein again.

Optionally, step 31 includes several substeps: step 311 to step 314.

Step 311: The analysis device obtains the N training terminal pairs.

Optionally, the analysis device obtains the training terminal pairs in various ways. For example, the analysis device reads the saved entries shown in Table 2, and obtains the training terminal pairs based on source IP addresses and destination IP addresses in the entries. Alternatively, the analysis device may also obtain, by using an address management device (for example, a dynamic host configuration protocol (Dynamic Host Configuration Protocol, DHCP) server), IP addresses in a network that are allocated to terminals for use; and then generate several terminal pairs through permutation and combination. The analysis device then selects N training terminal pairs from the several terminal pairs generated through permutation and combination. A selection manner includes random selection, selection according to a predetermined sequence, or the like. Details are not described herein.

Step 312: The analysis device selects one training terminal pair from the N training terminal pairs, and performs processing steps 312a and 312b on the selected training terminal pair, until all the N training terminal pairs are processed, where the selected training terminal pair includes a third terminal and a fourth terminal.

Step 312a: The analysis device selects a second group of target entries from saved entries that respectively correspond to a plurality of data flows, where the second group of target entries includes an entry in which a recorded unit moment belongs to the second historical time segment, a source IP address is an IP address of the third terminal, and a destination IP address is the fourth terminal, and an entry in which a recorded unit moment belongs to the second historical time segment, a destination IP address is the IP address of the fourth terminal, and a source IP address is the third terminal.

Step 312b: The analysis device determines that a connection state corresponding to a unit moment recorded in the selected second target entries is connectional, and determines that a connection state corresponding to a unit moment that is in the second historical time segment and that is other than the unit moment recorded in the selected second group of target entries is connectionless, thereby obtaining connection states of the selected training terminal pair that respectively correspond to the plurality of unit moments in the second historical time segment.

Step 312a and step 312b are respectively similar to step 21a and step 21b in FIG. 2. Details are not described herein again.

Due to length limitation, this embodiment provides a simple example for description. It is assumed that a prediction requirement is "to predict a connection state of a testing virtual machine pair in a future time segment based on connection states of the testing virtual machine pair in a first historical time segment that includes 24 x 6 unit moments, where the future time segment includes one unit moment". In other words, M = 24 x 6, and Q = 1. Figuratively speaking, the prediction requirement is to predict a connection state in the next hour based on connection states of all hours in past six days.

Table 8 shows connection states that are of a selected training virtual machine pair in past M + Q (24 x 6 + 1 = 145) hours and that are obtained by the analysis device by using step 312a and step 312b. For brevity, in a connection state table shown in Table 8, values 0 and 1 are used to indicate different connection states, where 0 represents connectionless and 1 represents connectional.

**Table 8**

| | | | | | | | | | |
|---|---|---|---|---|---|---|---|---|---|
| Unit moment identifier | 1 | 2 | 3 | 4 | 5 | 6 | 7 | ... | 145 |
| Connection state | 1 | 1 | 0 | 0 | 0 | 0 | 1 | ... | 1 |

Table 8 is an example of connection states of the training virtual machine pair that respectively correspond to unit moments in the second historical time segment. The analysis device performs step 312a and step 312b on all of N training virtual machine pairs, to obtain N status information tables as the one shown in Table 8.

Step 32: The analysis device generates, based on connection states that are of a first training terminal pair of the N training terminal pairs and that respectively correspond to the plurality of unit moments in the second historical time segment, a training sample sequence corresponding to the first training terminal pair, where the rest can be processed in the same way to obtain N training sample sequences, the training sample sequence corresponding to the first training terminal pair includes M + Q elements, and a value of each of the M + Q elements corresponds to a connection state that is of the first training terminal pair and that corresponds to one of M + Q consecutive unit moments.

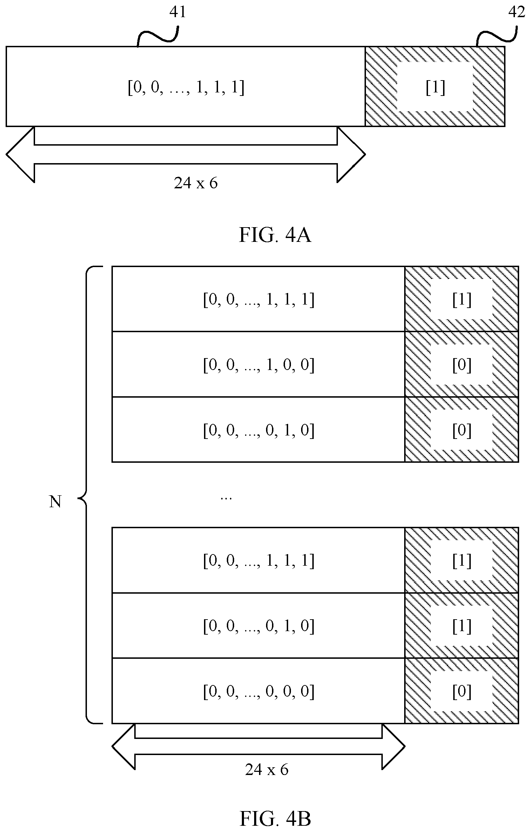

Refer to the foregoing example again. For a first training virtual machine pair of N training virtual machine pairs, the analysis device generates, based on a status information table that is similar to the one shown in Table 8 and that corresponds to the first training virtual machine pair, a training sample sequence corresponding to the first virtual machine pair. The training sample sequence includes M + Q (145) elements, as shown in FIG. 4A. It is assumed that a value of an element is 0 or 1, where 0 represents connectionless and 1 represents connectional. The analysis device uses the first M (24 × 6 = 144) elements in the sample sequence, for example, 41 in FIG. 4A, as a sample part of the training sample sequence. The analysis device uses the last one element, for example, 42 in FIG. 4A, as a label in the training sample sequence.

The analysis device performs step 32 on each of the N training virtual machine pairs, to obtain N training sample sequences, as shown in FIG. 4B.

Step 33: The analysis device inputs the N training sample sequences as training samples to a machine learning algorithm, and obtains a prediction model that is output by the machine learning algorithm.

Optionally, the machine learning algorithm includes, but is not limited to, a neural network, a decision tree, a random forest, a support vector machine, or the like. Various machine learning algorithms are available. Processes of generating a prediction model by using the machine learning algorithms based on the N training sample sequences cannot be enumerated. In this embodiment of this application, application of one machine learning algorithm to generating a prediction model is used as an example for description.

In this embodiment, a multilayer perceptron (Multi Layer Perceptron, MLP) is used as an example to describe in detail a process of generating a prediction model. A basic computing unit of a neural network is a node (node), and a node is also referred to as a neuron (neuron). Anode receives an external input and generates an output after computing an activation function. A weight represents a strength of association between an output node and a receiving node. A weight value is automatically adjusted in a process of training a neural network, until the weight value tends to stabilize. The weight value is a major object of training. The activation function is denoted as f() and is generally non-linear. The activation function mainly serves to add a nonlinear feature to an output of a neuron and enhance a capability of the neural network in learning a training sample.

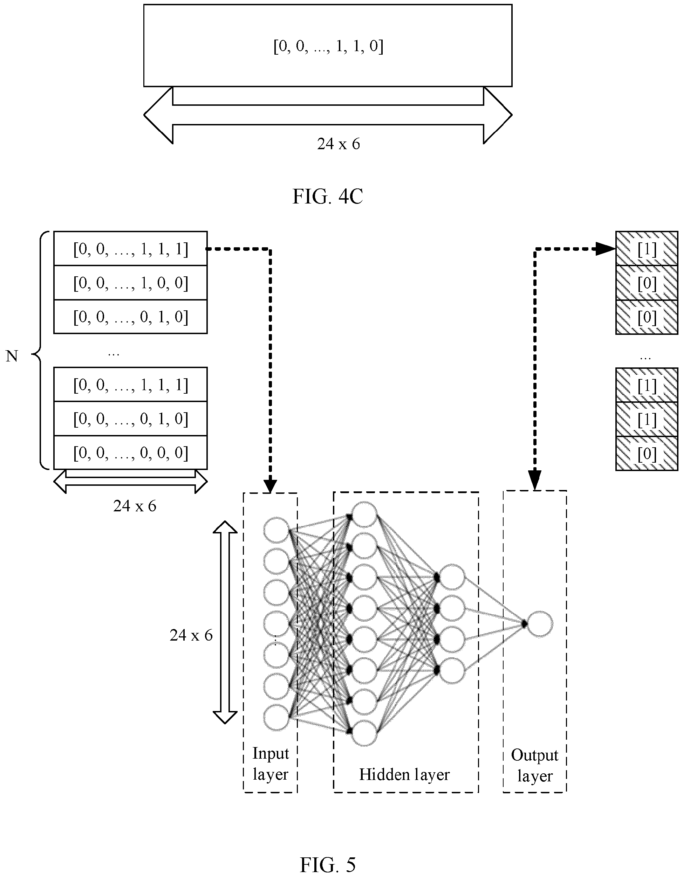

FIG. 5 is a schematic diagram of a process in which N training sample sequences are input to an MLP, to obtain a prediction model. The MLP in FIG. 5 includes an input layer (input layer) and an output layer (output layer). Optionally, to achieve a better learning effect, the MLP further includes one or more hidden layers (hidden layer). For brevity, as an example for description in this embodiment, the MLP includes two hidden layers. A quantity of nodes included in each hidden layer may be set. For example, a first hidden layer includes 64 nodes, and a second hidden layer includes 16 nodes.

A quantity of nodes included in the input layer of the MLP is the same as a quantity of elements included in a sample part of a training sample sequence, and a quantity of output nodes is the same as a quantity of elements included a label of the training sample sequence. In this embodiment, the quantity of elements included in the sample part of the training sample sequence is 144. Therefore, the quantity of nodes included in the input layer of the MLP is 144. In this embodiment, the quantity of elements included the label of the training sample sequence is 1. Therefore, the quantity of nodes included in the output layer of the MLP is 1.

When the analysis device inputs a training sample sequence to the MLP, elements in a sample part of the training sample sequence are respectively input to corresponding nodes in the input layer of the MLP. The analysis device compares a value of a node in the output layer with an element value in a label of the training sample sequence. If a difference between the value of the node in the output layer and the element value in the label of the training sample sequence is large, the MLP automatically adjusts a weight value by using f(). A process of obtaining a prediction model through learning is a process in which the MLP receives N training samples that are input by the analysis device and adjusts the weight value between a difference between a value of a node in the output layer and an element value in a label of a training sample sequence. When the weight value in the MLP is automatically adjusted to an ideal stable state, a learning process ends. At this time, the MLP in the structure shown in FIG. 5 and the weight value in the ideal state is the prediction model.

Optionally, to obtain a prediction model with a better prediction effect, the N training sample sequences that are input to the machine learning algorithm by the analysis device to generate the prediction model are a balanced sample set. The balanced sample set means that in the N training sample sequences used to generate the prediction model through training, a quantity of positive samples and a quantity of negative samples are approximately the same without a large difference. In other words, in the N training sample sequences, a ratio between the quantity of positive samples and the quantity of negative samples falls within a proper range. A positive sample is a training sample sequence in which a connection state indicated by a value of the last element is connectional, and a negative sample is a training sample sequence in which a connection state indicated by a value of the last element is connectionless. Optionally, an implementable proper range is a value from 0.5 to 2.

Step 34: The analysis device determines a first sample sequence based on connection states of a testing terminal pair that respectively correspond to a plurality of unit moments in a first historical time segment, where the first sample sequence includes M elements, and a value of each of the M elements corresponds to a connection state corresponding to one of M consecutive unit moments.

A method of determining the first sample sequence by the analysis device is basically similar to the method of generating a training sample sequence in step 32 of this process. Details are not described herein again. The generated first sample sequence is shown in FIG. 4C. The first sample sequence includes M (144) elements.

Step 35: The analysis device inputs the first sample sequence to the prediction model, and obtains an output result of the prediction model.

In this embodiment, the output result of the prediction model is a predicted sequence. The predicted sequence includes Q elements, and a value of each of the Q elements corresponds to a connection state corresponding to one of Q consecutive unit moments.

For example, after the analysis device inputs the first sample sequence shown in FIG. 4C to the prediction model, a predicted sequence output by the prediction model is "[1]". In the example used for description in this embodiment, Q = 1. Therefore, the predicted sequence includes one element. When a value of Q is another natural number greater than 1, the predicted sequence includes more elements. For example, when Q = 3, a form of the predicted sequence is "[1, 0, 1]".

Step 36: The analysis device determines, based on the output result of the prediction model, a connection state that is of the testing terminal pair and that corresponds to at least one unit moment in a future time segment.

It can be understood that when the predicted sequence output by the prediction model is "[1]", the analysis device determines that a connection state corresponding to the testing virtual machine pair (VM la-VM 2a) in the next hour is connectional.

This embodiment of this application provides a detailed process of generating a prediction model and predicting a connection state between terminals based on the prediction model. The subprocess including step 31 to step 33 in FIG. 3A and FIG. 3B describes how to generate a prediction model based on historical connection status information of training terminal pairs. In an application scenario using a DCN as an example, the analysis device first obtains, from a data source device, connection status information of a large quantity of training virtual machine pairs at a plurality of consecutive historical unit moments; and then generates a prediction model by using the machine learning algorithm based on the obtained connection status information. Compared with the mathematical model in the foregoing embodiment, the prediction model reflects trend information or pattern information that features better universality and reduces errors caused by accidental factors, thereby further improving prediction accuracy. The subprocess including step 34 to step 36 in FIG. 3A and FIG. 3B mainly describes a process in which the analysis device predicts a connection state of the testing terminal pair based on the prediction model. Based on the prediction model, a large amount of historical connection status information in the DCN is fully utilized to predict a connection state. According to actual data tests, accuracy of the prediction method provided in the embodiments of this application can reach approximately 98%. The prediction accuracy is obviously improved compared with that in a related existing technology.

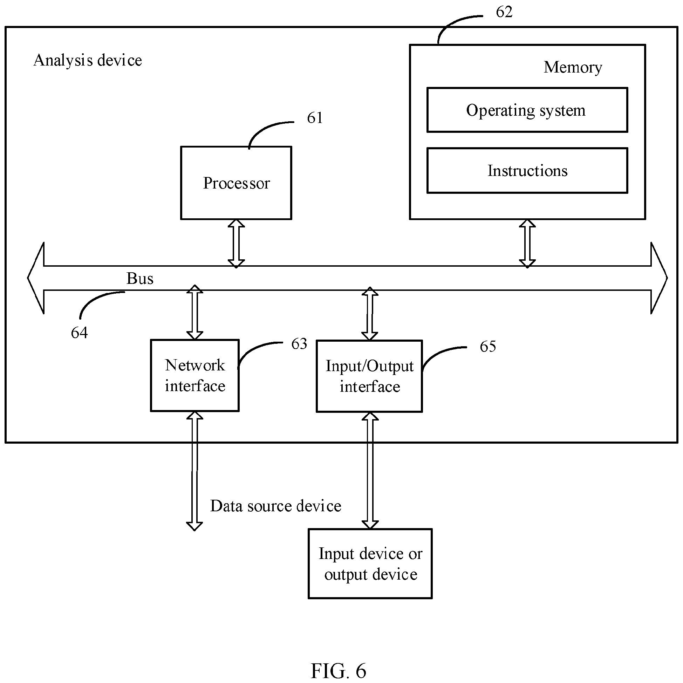

Correspondingly, an embodiment of this application further provides an analysis device, configured to implement the prediction method described in the foregoing embodiments. FIG. 6 is a schematic diagram of a structure of an analysis device according to an embodiment of this application. Optionally, the analysis device shown in FIG. 6 is the analysis device in the application scenario shown in FIG. 1 or the analysis device in the process shown in FIG. 2 or FIG. 3A and FIG. 3B. The analysis device includes at least one processor 61 and a memory 62.

The at least one processor 61 may be one or more CPUs. The CPU may be a single-core CPU, or may be a multi-core CPU.

The memory 62 includes, but is not limited to, a random access memory (random access memory, RAM), a read-only memory (Read only Memory, ROM), an erasable programmable read-only memory (erasable programmable read-only memory, EPROM or a flash memory), a flash memory, an optical memory, or the like. The memory 62 stores code of an operating system.

Optionally, the processor 61 implements the method in the foregoing embodiments by reading instructions stored in the memory 62. Alternatively, the processor 61 may implement the method in the foregoing embodiments by using instructions in an internal storage. When the processor 61 implements the method in the foregoing embodiments by reading the instructions stored in the memory 62, the memory 62 stores the instructions for implementing the method provided in the foregoing embodiments of this application.

After program code stored in the memory 62 is read by the at least one processor 61, the analysis device performs the following operations: obtaining connection states of a testing terminal pair that respectively correspond to a plurality of unit moments in a first historical time segment, where the testing terminal pair includes a first terminal and a second terminal, the first historical time segment is a time segment before a current time, the first historical time segment includes M consecutive unit moments, and M is a natural number greater than or equal to 2; and determining, based on the connection states of the testing terminal pair that respectively correspond to the plurality of unit moments in the first historical time segment, a connection state that is of the testing terminal pair and that corresponds to at least one unit moment in a future time segment, where the future time segment is a time segment after the current time, the future time segment includes Q consecutive unit moments, the first unit moment in the future time segment and the last unit moment in the first historical time segment are consecutive unit moments, and Q is a natural number greater than or equal to 1.

Optionally, the analysis device shown in FIG. 6 further includes a network interface 63. The network interface 63 may be a wired interface, for example, a fiber distributed data interface (Fiber Distributed Data Interface, FDDI) or a gigabit Ethernet (Gigabit Ethernet, GE) interface. Alternatively, the network interface 63 may be a wireless interface. The network interface 63 is configured to receive mirrored traffic from a data source or a plurality of flow statistical information entries.

The memory 62 is configured to store the mirrored traffic and the plurality of flow statistical information entries received by the network interface 63. The at least one processor 61 is configured to process the mirrored traffic and the plurality of flow statistical information entries to obtain several entries shown in Table 2, and save these entries to the memory 62.

The at least one processor 61 further performs the prediction method described in the foregoing method embodiments based on the entries saved to the memory 62. For more details about implementing the foregoing functions by the processor 61, refer to the descriptions in the foregoing method embodiments. Details are not described herein again.

Optionally, the analysis device further includes a bus 64. The processor 61 and the memory 62 are usually connected to each other by using the bus 64 or may be connected to each other in other manners.

Optionally, the analysis device further includes an input/output interface 65. The input/output interface 65 is configured to connect to an input device and receive a prediction requirement input by a user through the input device. The input device includes, but is not limited to, a keyboard, a touchscreen, a microphone, and the like. The input/output interface 65 is further configured to connect to an output device and output a prediction result of the processor 61. The output device includes, but is not limited to, a display, a printer, and the like.

The analysis device provided in this embodiment of this application is configured to perform the prediction method provided in the foregoing method embodiments. In a prediction process, the analysis device uses connection status information of the testing virtual machine pair at a plurality of historical unit moments, instead of connection status information of the testing virtual machine pair at a single historical unit moment. This is conducive to discover more useful information by analyzing historical status information, thereby improving prediction accuracy.

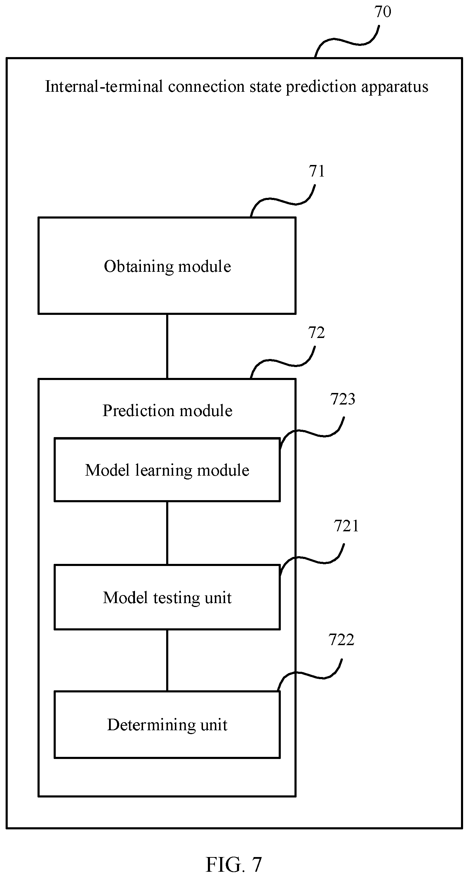

FIG. 7 is a schematic diagram of a structure of an inter-terminal connection state prediction apparatus according to an embodiment of this application. The inter-terminal connection state prediction apparatus 70 includes an obtaining module 71 and a prediction module 72.

The obtaining module 71 is configured to obtain connection states of a testing terminal pair that respectively correspond to a plurality of unit moments in a first historical time segment, where the testing terminal pair includes a first terminal and a second terminal, the first historical time segment is a time segment before a current time, the first historical time segment includes M consecutive unit moments, and M is a natural number greater than or equal to 2.

The prediction module 72 is configured to determine, based on the connection states of the testing terminal pair that respectively correspond to the plurality of unit moments in the first historical time segment, a connection state that is of the testing terminal pair and that corresponds to at least one unit moment in a future time segment, where the future time segment is a time segment after the current time, the future time segment includes Q consecutive unit moments, the first unit moment in the future time segment and the last unit moment in the first historical time segment are consecutive unit moments, and Q is a natural number greater than or equal to 1.

Optionally, the prediction module 72 includes a model testing unit 721 and a determining unit 722.

The model testing unit 721 is configured to input, to a prediction model, the connection states of the testing terminal pair that respectively correspond to the plurality of unit moments in the first historical time segment, and obtain an output result of the prediction model, where the prediction model is generated based on connection states that are of N training terminal pairs and that respectively correspond to a plurality of unit moments in a second historical time segment, the second historical time segment is a time segment before the current time, the second historical time segment includes M + Q consecutive unit moments, and N is a natural number greater than or equal to 1.

The determining unit 722 is configured to determine, based on the output result, the connection state that is of the testing terminal pair and that corresponds to the at least one unit moment in the future time segment.

Optionally, the model testing unit 721 is configured to: determine a first sample sequence based on the connection states of the testing terminal pair that respectively correspond to the plurality of unit moments in the first historical time segment, where the first sample sequence includes M elements, and a value of each of the M elements corresponds to a connection state corresponding to one of the M consecutive unit moments; and input the first sample sequence to the prediction model and obtain an output result of the prediction model, where the output result is a predicted sequence, the predicted sequence includes Q elements, and a value of each of the Q elements corresponds to a connection state corresponding to one of the Q consecutive unit moments.

Optionally, the prediction module 72 in FIG. 7 further includes a model learning unit 723, configured to perform the following steps before the model testing unit 721 inputs the first sample sequence to the prediction model: obtaining the connection states that are of the N training terminal pairs and that respectively correspond to the plurality of unit moments in the second historical time segment; generating, based on connection states that are of a first training terminal pair of the N training terminal pairs and that respectively correspond to the plurality of unit moments in the second historical time segment, a training sample sequence corresponding to the first training terminal pair, where the rest can be processed in the same way to obtain N training sample sequences, the training sample sequence corresponding to the first training terminal pair includes M + Q elements, and a value of each of the M + Q elements corresponds to a connection state that is of the first training terminal pair and that corresponds to one of the M + Q consecutive unit moments; and using the N training sample sequences as an input of a machine learning algorithm, and obtaining the prediction model that is output by the machine learning algorithm.

The apparatus embodiment shown in FIG. 7 is merely an example. For example, the module division is merely logical function division and may be other division during actual implementation. For example, a plurality of modules or components may be combined or integrated into another system, or some features may be ignored or not performed. Function modules in the embodiments of this application may be integrated into one processing module, or each of the modules may exist alone physically, or two or more modules may be integrated into one module. The foregoing modules in FIG. 7 may be implemented in a form of hardware, or may be implemented in a form of a software function unit. For example, during implementation by using software, the obtaining module 71, the prediction module 72, the model testing unit 721, the determining unit 722, and the model learning unit 723 may be implemented by a software function module that is generated after the at least one processor 61 in FIG. 6 reads the program code stored in the memory. The modules in FIG. 7 may alternatively be implemented respectively by different hardware in the analysis device. For example, the obtaining module 71 is implemented together by the network interface 63 and some processing resources in the at least one processor 63 (for example, a core in a multi-core processor) in FIG. 6, and the prediction module 72 is implemented by some remaining processing resources in the at least one processor 63 (for example, another core in the multi-core processor) in FIG. 6 or by a programmable device, for example, a field-programmable gate array (Field-Programmable Gate Array, FPGA) or a coprocessor. Clearly, the foregoing function modules may alternatively be implemented by a combination of software and hardware. For example, the obtaining module 71 is implemented by a hardware programmable device, and the prediction module 72 is a software function module generated after a CPU reads the program code stored in the memory.

For more details about implementing the foregoing functions by the obtaining module 71, the prediction module 72, and the units in the prediction module in FIG. 7, refer to descriptions in the foregoing method embodiments. Details are described herein again.

The embodiments in this specification are all described in a progressive manner, for same or similar parts in the embodiments, refer to these embodiments, and each embodiment focuses on a difference from other embodiments. Especially, a system embodiment is basically similar to a method embodiment, and therefore is described briefly. For related parts, refer to partial descriptions in the method embodiment.

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or the functions according to the embodiments of the present invention are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

It is clear that a person skilled in the art can make various modifications and variations to this application without departing from the scope of this application. This application is intended to cover these modifications and variations provided that they fall within the scope of protection defined by the following claims.

## Claims

1. An inter-terminal connection state prediction method, comprising:
obtaining, by an analysis device, connection states of a testing terminal pair that respectively correspond to a plurality of unit moments in a first historical time segment, wherein the testing terminal pair comprises a first terminal and a second terminal, the first historical time segment is a time segment before a current time, the first historical time segment comprises M consecutive unit moments, and M is a natural number greater than or equal to 2; and
determining, by the analysis device based on the connection states of the testing terminal pair that respectively correspond to the plurality of unit moments in the first historical time segment, a connection state that is of the testing terminal pair and that corresponds to at least one unit moment in a future time segment, wherein the future time segment is a time segment after the current time, the future time segment comprises Q consecutive unit moments, the first unit moment in the future time segment and the last unit moment in the first historical time segment are consecutive unit moments, and Q is a natural number greater than or equal to 1.

2. The prediction method according to claim 1, wherein the determining a connection state that is of the testing terminal pair and that corresponds to at least one unit moment in a future time segment comprises:
inputting, by the analysis device to a prediction model, the connection states of the testing terminal pair that respectively correspond to the plurality of unit moments in the first historical time segment, and obtaining an output result of the prediction model, wherein the prediction model is generated based on connection states that are of N training terminal pairs and that respectively correspond to a plurality of unit moments in a second historical time segment, the second historical time segment is a time segment before the current time, the second historical time segment comprises M + Q consecutive unit moments, and N is a natural number greater than or equal to 1; and
determining, by the analysis device based on the output result, the connection state that is of the testing terminal pair and that corresponds to the at least one unit moment in the future time segment.

3. The prediction method according to claim 2, wherein the inputting to a prediction model and obtaining an output result of the prediction model comprises:
determining, by the analysis device, a first sample sequence based on the connection states of the testing terminal pair that respectively correspond to the plurality of unit moments in the first historical time segment, wherein the first sample sequence comprises M elements, and a value of each of the M elements corresponds to a connection state corresponding to one of the M consecutive unit moments; and
inputting, by the analysis device, the first sample sequence to the prediction model and obtaining an output result of the prediction model, wherein the output result is a predicted sequence, the predicted sequence comprises Q elements, and a value of each of the Q elements corresponds to a connection state corresponding to one of the Q consecutive unit moments.

4. The prediction method according to claim 3, wherein when a value of one of the M elements or Q elements is a first value, it indicates that a connection state at a corresponding unit moment is connectional; and when a value of one of the M elements or Q elements is a second value, it indicates that a connection state at a corresponding unit moment is connectionless, wherein the first value and the second value are different.

5. The prediction method according to claim 3 or 4, before the inputting the first sample sequence to the prediction model, further comprising:
obtaining the connection states that are of the N training terminal pairs and that respectively correspond to the plurality of unit moments in the second historical time segment;
generating, based on connection states that are of a first training terminal pair of the N training terminal pairs and that respectively correspond to the plurality of unit moments in the second historical time segment, a training sample sequence corresponding to the first training terminal pair, wherein the rest can be processed in the same way to obtain N training sample sequences, the training sample sequence corresponding to the first training terminal pair comprises M + Q elements, and a value of each of the M + Q elements corresponds to a connection state that is of the first training terminal pair and that corresponds to one of the M + Q consecutive unit moments; and
using the N training sample sequences as an input of a machine learning algorithm, and obtaining the prediction model that is output by the machine learning algorithm.

6. The prediction method according to any one of claims 1 to 5, wherein the obtaining connection states of a testing terminal pair that respectively correspond to a plurality of unit moments in a first historical time segment comprises:
selecting, by the analysis device, a first group of target entries from saved entries that respectively correspond to a plurality of data flows, wherein the first group of target entries comprises an entry in which a recorded unit moment belongs to the first historical time segment, a source IP address is an IP address of the first terminal, and a destination IP address is the second terminal, and an entry in which a recorded unit moment belongs to the first historical time segment, a destination IP address is the IP address of the first terminal, and a source IP address is the second terminal; and
determining, by the analysis device, that a connection state corresponding to a unit moment recorded in the selected first group of target entries is connectional; and determining that a connection state corresponding to a unit moment that is in the first historical time segment and that is other than the unit moment recorded in the selected first group of target entries is connectionless, thereby obtaining the connection states of the testing terminal pair that respectively correspond to the plurality of unit moments in the first historical time segment.

7. The prediction method according to any one of claims 2 to 6, wherein the obtaining the connection states that are of the N training terminal pairs and that respectively correspond to the plurality of unit moments in the second historical time segment comprises:
obtaining, by the analysis device, the N training terminal pairs; and
selecting, by the analysis device, one training terminal pair from the N training terminal pairs, and performing the following processing steps on the selected training terminal pair, until all the N training terminal pairs are processed, wherein the selected training terminal pair comprises a third terminal and a fourth terminal:
selecting, by the analysis device, a second group of target entries from the saved entries that respectively correspond to the plurality of data flows, wherein the second group of target entries comprises an entry in which a recorded unit moment belongs to the second historical time segment, a source IP address is an IP address of the third terminal, and a destination IP address is the fourth terminal, and an entry in which a recorded unit moment belongs to the second historical time segment, a destination IP address is the IP address of the fourth terminal, and a source IP address is the third terminal; and
determining, by the analysis device, that a connection state corresponding to a unit moment recorded in the selected second target entries is connectional, and determining that a connection state corresponding to a unit moment that is in the second historical time segment and that is other than the unit moment recorded in the selected second group of target entries is connectionless, thereby obtaining connection states of the selected training terminal pair that respectively correspond to the plurality of unit moments in the second historical time segment.

8. The prediction method according to claim 7, wherein when Q = 1, a ratio between a quantity of positive samples and a quantity of negative samples in the N training sample sequences is greater than or equal to 0.5 and less than or equal to 2, wherein a positive sample is a training sample sequence in which a connection state indicated by a value of the last element is connectional, and a negative sample is a training sample sequence in which a connection state indicated by a value of the last element is connectionless.

9. The prediction method according to claim 6 or 7, further comprising:
obtaining, by the analysis device, a plurality of flow statistical information entries, wherein each of the plurality of flow statistical information entries corresponds to one dataflow, and the flow statistical information entry comprises a creation time, a closing time, a source IP address, and a destination IP address of the data flow; and
performing, by the analysis device, time alignment processing on each flow statistical information entry by using the unit moment as a criterion based on a preset time alignment rule, generating entries respectively corresponding to the plurality of data flows, and saving the entries respectively corresponding to the plurality of data flows, wherein each of the entries respectively corresponding to the plurality of data flows records a unit moment, a source IP address, and a destination IP address.

10. The prediction method according to any one of claims 7 to 9, wherein the first terminal, the second terminal, the third terminal, and the fourth terminal are all virtual machines.

11. The prediction method according to claim 10, wherein the virtual machines are deployed in a data center connected through a data center network.

12. An inter-terminal connection state prediction apparatus, comprising:
an obtaining module, configured to obtain connection states of a testing terminal pair that respectively correspond to a plurality of unit moments in a first historical time segment, wherein the testing terminal pair comprises a first terminal and a second terminal, the first historical time segment is a time segment before a current time, the first historical time segment comprises M consecutive unit moments, and M is a natural number greater than or equal to 2; and
a prediction module, configured to determine, based on the connection states of the testing terminal pair that respectively correspond to the plurality of unit moments in the first historical time segment, a connection state that is of the testing terminal pair and that corresponds to at least one unit moment in a future time segment, wherein the future time segment is a time segment after the current time, the future time segment comprises Q consecutive unit moments, the first unit moment in the future time segment and the last unit moment in the first historical time segment are consecutive unit moments, and Q is a natural number greater than or equal to 1.

13. The prediction apparatus according to claim 12, wherein the prediction module comprises a model testing unit and a determining unit, wherein
the model testing unit is configured to: input, to a prediction model, the connection states of the testing terminal pair that respectively correspond to the plurality of unit moments in the first historical time segment, and obtain an output result of the prediction model, wherein the prediction model is generated based on connection states that are of N training terminal pairs and that respectively correspond to a plurality of unit moments in a second historical time segment, the second historical time segment is a time segment before the current time, the second historical time segment comprises M + Q consecutive unit moments, and N is a natural number greater than or equal to 1; and
the determining unit is configured to determine, based on the output result, the connection state that is of the testing terminal pair and that corresponds to the at least one unit moment in the future time segment.

14. The prediction apparatus according to claim 13, wherein
the model testing unit is configured to: determine a first sample sequence based on the connection states of the testing terminal pair that respectively correspond to the plurality of unit moments in the first historical time segment, wherein the first sample sequence comprises M elements, and a value of each of the M elements corresponds to a connection state corresponding to one of the M consecutive unit moments; and input the first sample sequence to the prediction model and obtain an output result of the prediction model, wherein the output result is a predicted sequence, the predicted sequence comprises Q elements, and a value of each of the Q elements corresponds to a connection state corresponding to one of the Q consecutive unit moments.

15. The prediction apparatus according to claim 14, wherein the prediction module further comprises:
a model learning unit, configured to perform the following steps before the model testing unit inputs the first sample sequence to the prediction model: obtaining the connection states that are of the N training terminal pairs and that respectively correspond to the plurality of unit moments in the second historical time segment; generating, based on connection states that are of a first training terminal pair of the N training terminal pairs and that respectively correspond to the plurality of unit moments in the second historical time segment, a training sample sequence corresponding to the first training terminal pair, wherein the rest can be processed in the same way to obtain N training sample sequences, the training sample sequence corresponding to the first training terminal pair comprises M + Q elements, and a value of each of the M + Q elements corresponds to a connection state that is of the first training terminal pair and that corresponds to one of the M + Q consecutive unit moments; and using the N training sample sequences as an input of a machine learning algorithm, and obtaining the prediction model that is output by the machine learning algorithm.

16. An analysis device, comprising a memory and at least one processor connected to the memory, wherein
the memory is configured to store instructions, and after the instructions are read by the at least one processor, the analysis device performs the following operations:
obtaining connection states of a testing terminal pair that respectively correspond to a plurality of unit moments in a first historical time segment, wherein the testing terminal pair comprises a first terminal and a second terminal, the first historical time segment is a time segment before a current time, the first historical time segment comprises M consecutive unit moments, and M is a natural number greater than or equal to 2; and determining, based on the connection states of the testing terminal pair that respectively correspond to the plurality of unit moments in the first historical time segment, a connection state that is of the testing terminal pair and that corresponds to at least one unit moment in a future time segment, wherein the future time segment is a time segment after the current time, the future time segment comprises Q consecutive unit moments, the first unit moment in the future time segment and the last unit moment in the first historical time segment are consecutive unit moments, and Q is a natural number greater than or equal to 1.
